# EUROPÄISCHE PATENTSCHRIFT

(11) **EP 3 687 711 B1**
(45) Veröffentlichungstag und Bekanntmachung des Hinweises auf die Patenterteilung: **11.10.2023**
(21) Anmeldenummer: 18758858.7
(22) Anmeldetag: 20.08.2018
(51) Int. Cl.: B21D 11/14

(54) **VERFAHREN UND BIEGEMASCHINE ZUR HERSTELLUNG VON BIEGETEILEN AUS FLACHMATERIAL**
METHOD AND BENDING MACHINE FOR PRODUCING BENT PARTS FROM FLAT MATERIAL
PROCÉDÉ ET MACHINE DE PLIAGE POUR LA FABRICATION DE PIÈCES PLIÉES À PARTIR D'UN MATÉRIAU PLAT

(30) Priorität: 26.09.2017 DE 102017217032
(43) Veröffentlichungstag der Anmeldung: 05.08.2020
(73) Patentinhaber: WAFIOS Aktiengesellschaft, 72764 Reutlingen (DE)
(72) Erfinder: MÖCK, Jörg, 72820 Sonnenbühl (DE); SERIO, Maurizio, 72760 Reutlingen (DE); SAUTTER, Robin, 72793 Pfullingen (DE)
(74) Vertreter: Patentanwälte Ruff, Wilhelm, Beier, Dauster & Partner mbB
(86) Internationale Anmeldenummer: PCT/EP2018/072434
(87) Internationale Veröffentlichungsnummer: WO 2019/063198

(56) Entgegenhaltungen:
- EP-A1- 0 125 792
- EP-A2- 0 402 024
- JP-A- H0 523 749
- US-A- 3 421 351
- US-A1- 2003 029 215
- US-B1- 6 378 347
- US-B2- 7 878 038

## Beschreibung

### ANWENDUNGSGEBIET UND STAND DER TECHNIK

Die Erfindung betrifft ein Verfahren zur Herstellung von Biegeteilen aus Flachmaterial sowie eine zur Durchführung des Verfahrens geeignete Biegemaschine.

Auf dem Markt werden zunehmend Fahrzeuge mit voll- oder teilelektrischem Antrieb angeboten. Die Fahrzeuge besitzen meist leistungsfähige Energiespeichersysteme mit mehreren Batteriemodulen. Die elektrische Energie muss zwischen den einzelnen Batteriemodulen transportiert werden. Dazu werden isolierte und gebogene Kupfer- oder Aluminiumschienen verwendet, die auch als "Stromschienen" bezeichnet werden. Weiterhin werden zunehmend die in Längsrichtung von Fahrzeugen zwischen Front und Heck laufenden Kabelbäume durch Stromschienen ersetzt. Aufgrund der immer größer werdenden Ströme werden Stromschienen mit entsprechend großem stromführenden Querschnitt benötigt. Da die für die Verlegung von Stromschienen zur Verfügung stehenden Bauräume zum Teil relativ eng und geometrisch komplex sind, werden in vielen Fällen Stromschienen benötigt, die an einer oder mehreren Stellen Biegungen aufweisen.

Stromschienen werden in der Regel unter Verwendung von entsprechend geformtem Flachmaterial hergestellt, z.B. Kupfer- oder Aluminiumflachdraht mit flachem Rechteckquerschnitt. Das Flachmaterial kann abschnittsweise oder durchgehend mit einer elektrisch isolierenden Isolationsschicht ummantelt sein.

Für komplexere Einbauumgebungen kann es zweckmäßig sein, in mindestens einem Abschnitt des Flachmaterials durch Torsion des Flachmaterials eine bleibende Verformung bzw. einen verdrehten bzw. tordierten Abschnitt zu erzeugen, so dass Flachmaterial-Abschnitte vor und hinter dem tordierten Abschnitt gegeneinander verdreht sind. Es gibt für diesen Zweck z.B. von der Firma Stierli-Bieger AG (CH) besondere Biegemaschinen, die manuell eingelegtes Flachmaterial unter Torsion biegen können.

Dokument EP 0 125 792 A1 offenbart eine Maschine, mit der Flachmaterial tordiert werden kann. Die Maschine weist zwei schräg gegeneinander gestellte Rollen auf.

Dokument US 2003/0029215 A1 zeigt eine Einrichtung zum Biegen und Tordieren von Flachmaterial, im Beispielsfall Flachdraht zur Produktion von Scheibenwischerarmen. Der Biegekopf weist einen Werkzeughalter auf, der um eine radial zur X-Achse verlaufende Y-Achse drehbar ist und ein Werkzeug mit zwei Beinen hält, zwischen denen ein Spalt zum Hindurchführen des Flachmaterials gebildet ist.

Dokument US 7 878 038 B2, die die Basis für die Oberbegriffe der Ansprüche 1 und 4 bildet, offenbart ein Verfahren und eine Biegemaschine zur Herstellung von Biegeteilen. Die Vorrichtung weist zwischen einer Einzugseinrichtung und einer Biegeeinrichtung eine Verdreheinrichtung auf, um das Material um seine Längsachse zu verdrehen. Die Einzugseinrichtung ist nicht drehbar. Die Biegeeinrichtung dreht sich gemeinsam mit der Verdreheinrichtung.

### AUFGABE UND LÖSUNG

Es ist eine Aufgabe der Erfindung, die Produktivität bei der Herstellung von komplex gebogenen Biegeteilen aus Flachmaterial zu verbessern.

Zur Lösung dieser Aufgabe stellt die Erfindung ein Verfahren mit den Merkmalen von Anspruch 1 bereit. Weiterhin wird eine Biegemaschine mit den Merkmalen von Anspruch 4 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Bei dem Verfahren wird das Flachmaterial der Biegemaschine von einem Materialvorrat (z.B. einer Haspel mit Coil) zugeführt. Die Biegemaschine hat hierzu eine Einzugseinrichtung zum Zuführen von Flachmaterial von dem Materialvorrat. In der Biegemaschine wird das Flachmaterial zu einem zweidimensional oder dreidimensional gebogenen Biegeteil aus isoliertem Flachmaterial umgeformt. Die Biegemaschine hat hierzu unter anderem eine der Einzugseinrichtung nachgeschaltete Biegeeinrichtung mit einem Biegekopf zum Biegen des Flachmaterials. Das Flachmaterial wird der Biegeeinrichtung mit Hilfe der Einzugseinrichtung zugeführt. Nach Abschluss der Biegeoperation, bei welcher an dem Flachmaterial eine oder mehrere Biegungen in einer oder mehreren Biegeebenen erzeugt werden, wird das Biegeteil in einer Schnittoperation von dem zugeführten Flachmaterial abgetrennt. Hierzu ist an der Biegemaschine eine Schnitteinrichtung zum Abtrennen des Biegeteils von dem zugeführten Flachmaterial vorgesehen. Mit dem Verfahren kann Flachmaterial ohne umhüllende Isolierschicht, also blankes Flachmaterial, verarbeitet werden. Es ist auch möglich, isoliertes Flachmaterial zu verarbeiten, d.h. Flachmaterial, das ein flaches elektrisch leitendes Trägermaterial aufweist, welches von einer elektrisch isolierenden Isolationsschicht umhüllt ist.

Gemäß dem beanspruchten Verfahren wird in mindestens einem Abschnitt des Flachmaterials mittels einer Verdreh-Operation durch Torsion des Flachmaterials eine bleibende Verformung in Form eines verdrehten bzw. tordierten Abschnitts erzeugt, wobei die Verdreh-Operation vor dem Abtrennen des Biegeteils von dem zugeführten Flachmaterial an dem in der Biegemaschine geführten Flachmaterial mittels einer in die Biegemaschine integrierten Verdreheinrichtung durchgeführt wird. Bei der Verdreh-Operation bzw. der damit verbundenen Torsion wird auf das Flachmaterial ein Drehmoment (bzw. ein Torsionsmoment) aufgebracht. Dadurch wird in dem Flachmaterial ein verdrehter Abschnitt bzw. tordierter Abschnitt erzeugt. Die Verdrehung erfolgt dabei über eine gewisse Länge des Flachmaterials, die als Verdrehlänge bezeichnet wird. Die Verdrehlänge kann z.B. etwa bei den Doppelten der Breite des Flachmaterials liegen, z.B. im Bereich von 150% bis 250% dieser Breite. Die Flachmaterialabschnitte vor und hinter dem tordierten Abschnitt sind bezogen auf die Längsachse des Flachmaterials relativ zueinander verdreht, beispielsweise so, dass der Verdrehwinkel etwa 90° beträgt und die Flachmaterialabschnitte dadurch im Wesentlichen senkrecht zueinander ausgerichtet sind. Auch andere Verdrehwinkel im Bereich zwischen 0° und 90° sind möglich, größere Verdrehwinkel möglich, aber in der Regel aus technischer Sicht nicht nötig. Das fertige Biegeteil enthält somit zusätzlich zu mindestens einer zweidimensionalen oder dreidimensionalen Biegung wenigstens einen tordierten Abschnitt. Ebene Biegungen können sich auf nur einer Seite des tordierten Abschnitts oder auf beiden Seiten des tordierten Abschnitts befinden. Es können somit mit dem in der Biegemaschine ablaufenden Fertigungsprozess äußerst komplex gebogene Biegeteile hergestellt werden, die dadurch auch an sehr kompliziert geformte Einbauumgebungen angepasst werden können. Da alle hierfür benötigten Umformungsoperationen (Biegeoperationen und Verdreh-Operationen) in der Biegemaschine unter der Steuerung durch die Steuerungseinheit der Biegemaschine durchgeführt werden können, kann die Produktivität bei der Herstellung von komplex gebogenen Biegeteilen aus Flachmaterial gegenüber herkömmlichen Lösungen deutlich verbessert werden.

Eine zur Durchführung des Verfahrens geeignete Biegemaschine zur Herstellung von Biegeteilen aus Flachmaterial weist eine Einzugseinrichtung zum Einziehen von Flachmaterial von einem Materialvorrat mit Flachmaterial, eine Biegeeinrichtung mit einem Biegekopf zum Biegen des Flachmaterials zu einem zwei- oder dreidimensional gebogenen Biegeteil aus Flachmaterial und eine Schnitteinrichtung zum Abtrennen des Biegeteils von dem zugeführten Flachmaterial auf. Vorzugsweise ist auch eine Richteinheit zur Begradigung beider Seiten des Flachmaterials in Längsrichtung vorgesehen. Biegemaschinen gemäß der beanspruchten Erfindung zeichnen sich u.a. dadurch aus, dass zusätzlich eine in die Biegemaschine integrierte Verdreheinrichtung vorgesehen ist, die dazu konfiguriert ist, vor dem Abtrennen des Biegeteils von dem zugeführten Flachmaterial in mindestens einem Abschnitt des Flachmaterials mittels einer Verdreh-Operation durch Torsion des Flachmaterials eine bleibende Verformung (d.h. einen verdrehten bzw. tordierten Abschnitt) zu erzeugen. Alle Umformoperationen können unter Steuerung durch die Steuerungseinheit der Biegemaschine durchgeführt werden. Dazu sind steuerbare Komponenten der Verdreheinrichtung (mindestens eine) an die Steuerungseinheit der Biegemaschine angeschlossen. Geometrische Parameter des verdrehten Abschnitts, z.B. die Position in Längsrichtung des Flachmaterials und der Verdrehwinkel, können über die Steuerung der Biegemaschine vorgegeben werden. Komplex gebogene Biegeteile können damit schnell und mit hoher Maßgenauigkeit bezüglich der Lage des verdrehten Abschnitts hergestellt.

Eine besonders kompakte Bauform der Biegemaschine mit integrierter Verdreheinrichtung ergibt sich bei manchen Ausführungsformen dadurch, dass die Verdreheinrichtung bzw. die in Eingriff mit dem Flachmaterial kommenden Komponenten der Verdreheinrichtung zwischen der Einzugseinrichtung und dem Biegekopf der Biegeeinrichtung angeordnet sind. Die Erzeugung des tordierten Abschnitts findet also räumlich gesehen zwischen der Einzugseinrichtung und dem Biegekopf statt. Eine solche Verdreheinrichtung wird im Rahmen dieser Anmeldung auch als "Inline-Verdreheinrichtung" bezeichnet. Ein weiterer Vorteil neben einer möglichen kompakten Bauform ist eine besonders große Prozesssicherheit bei Nutzung dieser Variante, denn es wird zur Einzugseinrichtung hin verdreht und nicht in Richtung der bereits gebogenen Abschnitte des Flachmaterials. Somit können eventuelle Probleme bei der Abstützung von bereits gebogenen Abschnitten des Biegeteils vermieden werden.

Bei nicht zur beanspruchten Erfindung gehörenden Varianten ist es möglich, die Verdreheinrichtung bzw. ihre am Flachmaterial angreifenden Komponenten in Materialflussrichtung hinter dem Biegekopf der Biegemaschine anzuordnen, so dass die Verdreheinrichtung dem Biegekopf der Biegeeinrichtung nachgeschaltet ist. Realisierungsmöglichkeiten für derartige Anordnungen werden im Zusammenhang mit den Ausführungsbeispielen näher beschrieben.

Es gibt unterschiedliche Möglichkeiten, die zum Verdrehen bzw. Tordieren erforderliche Kraft in das Werkstück (Flachmaterial) einzuleiten. Gemäß der beanspruchten Erfindung wird das Flachmaterial während der Verdreh-Operation an beiden Seiten eines zu verdrehenden Abschnitts durch steuerbare Einrichtungen der Biegemaschine geführt und/oder gehalten, so dass der zu verdrehende Abschnitt und später der verdrehte Abschnitt zwischen den steuerbaren Einrichtungen liegt. Die Torsion wird dann durch Relativverdrehung der steuerbaren Einrichtungen gegeneinander erzeugt. Die Krafteinleitung zur Torsion erfolgt bei diesen Varianten aus der Verdreheinrichtung.

Bei nicht zur beanspruchten Erfindung gehörenden Varianten ist es möglich, die Torsion mittels eines Paars von Steigungsrollen zu erzeugen, wobei die Krafteinleitung zum Verdrehen dann aus dem über die Einzugseinrichtung erzeugten Vorschub des Flachmaterials in seiner Längsrichtung erfolgen würde. Es ist auch möglich, dass die Verdreheinrichtung zwei in der gleichen axialen Ebene am Flachmaterial angreifende Werkzeuge aufweist, die translatorisch aufeinander zugestellt werden können und jeweils eine zum Flachmaterial gerichtete konvexe Rundung aufweisen. Im Abstand der Verdrehlänge dazu ist ein Gegenhalter (beispielsweise eine Zange oder Klemme) angeordnet, um das Material zu stützen. Fahren die beiden Werkzeuge aufeinander zu, so wird das Flachmaterial gegen die Führung verdreht und ein tordierter Abschnitt erzeugt.

Gemäß der beanspruchten Erfindung ist vorgesehen, dass die Verdreheinrichtung eine drehbare Komponente, also eine drehbar gelagerte Komponente, aufweist, die mittels eines Antriebs der Biegemaschine (Verdrehantrieb) um eine Verdrehachse drehbar ist und die eine querschnittsangepasste Durchführungsöffnung zum Hindurchführen des Flachmaterials aufweist. Der Begriff "querschnittsangepasst" bedeutet hierbei, dass der Querschnitt der Durchführungsöffnung an den Querschnitt des Flachmaterials so angepasst ist, dass das Flachmaterial mit geringem Spiel durch die Durchführungsöffnung passt und bei Drehung der drehbaren Komponente im Bereich der Durchführungsöffnung mitgenommen und dadurch tordiert werden kann. Die Durchführungsöffnung kann in Umfangsrichtung geschlossen, ggf. aber auch an mindestens einer Seite offen sein. Der Verdrehantrieb ist zur Durchführung der Verdreh-Operation mit der drehbaren Komponente zur Übertragung eines Drehmoments gekoppelt, so dass Drehgeschwindigkeit, Drehwinkel sowie die zeitliche Lage des Drehvorgangs durch Ansteuerung dieses Verdrehantriebs mittels der Steuerung vorgegeben werden können.

Die Verdreheinrichtung könnte eine weitere solche drehbare Komponente aufweisen, die zur Erzeugung der Torsion beispielsweise gegenläufig zu der anderen drehbaren Komponente gedreht wird und sich in geeignetem Abstand (Verdrehlänge) zur drehbaren Komponente befindet. Bei bevorzugten Ausführungsformen ist jedoch nur eine solche drehbare Komponente vorhanden, wodurch die Konstruktion weniger komplex wird. Vorzugsweise wird die Gegenkraft zu der durch die drehbare Komponente eingeleiteten Kraft durch eine Gegenhaltereinrichtung aufgebracht, die funktionaler Bestandteil der Verdreheinrichtung ist und mit axialem Abstand zur drehbaren Komponente angeordnet ist. Der axiale Abstand bestimmt die Verdrehlänge. Die Gegenhaltereinrichtung kann mittels eines zugeordneten Antriebs (Gegenhalterantrieb) wahlweise in Eingriff und außer Eingriff mit dem Flachmaterial bewegt werden. Die Gegenhaltereinrichtung kann beispielsweise translatorisch zustellbar sein. Sie kann einen Schieber aufweisen, der mittels eines pneumatischen Antriebs zwischen einer Eingriffsposition und einer zurückgezogenen Position bewegt werden kann. Alternativ kann die Gegenhaltereinrichtung auch zwei Klemmbacken aufweisen, die an gegenüberliegenden Seiten des Flachmaterials nach Art einer Haltezange angreifen können und im Eingriffsbereich das Flachmaterial festhalten, während durch die andere steuerbare Einrichtung (drehbare Komponente) die Torsionskräfte eingeleitet werden.

Es gibt auch Ausführungsformen, bei denen der Biegekopf der Biegeeinheit als Gegenhaltereinheit der Verdreheinrichtung verwendet wird, z.B. indem ein im Bereich des Biegekopfs liegender Abschnitt des Flachmaterials zwischen gegeneinander beweglichen Elementen (beispielsweise Biegestift und Biegedorn) des Biegekopfs fixiert wird, ohne eine bleibende Biegung zu erzeugen. Auch dieser Gegenhaltereingriff kann unter Steuerung durch die Steuereinheit der Biegemaschine durchgeführt werden. In diesem Fall kann auf eine zusätzlich zum Biegekopf vorgesehene Gegenhaltereinheit verzichtet werden.

Für die Verdrehung der drehbaren Komponente der Verdreheinrichtung können im Rahmen der beanspruchten Erfindung unterschiedliche Konzepte genutzt werden.

Bei manchen Ausführungsformen ist zum Verdrehen der drehbaren Komponente ein von der Einzugseinrichtung gesonderter Verdrehantrieb vorgesehen, also eine eigene, unabhängig von anderen Maschinenachsen ansteuerbare Maschinenachse. Die Ansteuerung erfolgt vorzugsweise so, dass eine synchrone Drehung mit der drehbaren Einzugseinrichtung erfolgt, so dass das Flachmaterial zwischen der Einzugseinrichtung und der drehbaren Komponente der Verdreheinrichtung nicht tordiert wird. Wenn ein gesonderter Verdrehantrieb für die drehbare Komponente vorgesehen ist, kann ein Zwischenraum zwischen dem Austritt der Einzugseinrichtung und dem Eintritt der drehbaren Komponente der Verdreheinrichtung so groß bemessen sein, dass weitere funktionelle Baugruppen der Biegemaschine dort am Flachmaterial angreifen können. Bei manchen Ausführungsformen der Biegemaschine ist beispielsweise vorgesehen, dass die Biegemaschine eine integrierte Abisoliereinrichtung zum Abisolieren von Abschnitten des isolierten Flachmaterials vor Abtrennen des Biegeteils von dem zugeführten Flachmaterial aufweist. Diese Abisoliereinrichtung kann zwischen der Einzugseinrichtung und der Verdreheinrichtung der Biegeeinrichtung angeordnet sein.

Es ist jedoch nicht zwingend, für die Verdrehung der drehbaren Komponente der Verdreheinrichtung einen gesonderten Antrieb vorzusehen. Bei manchen Ausführungsformen mit drehbarer Einzugseinrichtung wird der für die Drehung der Einzugseinrichtung verwendete Antrieb auch als Verdrehantrieb zur Drehung der drehbaren Komponente genutzt bzw. verwendet.

Die drehbare Komponente der Verdreheinrichtung kann an ihrer der Einzugseinrichtung zugewandten Seite eine erste Kupplungsstruktur zum drehmoment-übertragenden (drehfesten) Ankuppeln eines über den Verdrehantrieb angetriebenen Antriebselements aufweisen. Beispielsweise kann die Kupplungsstruktur auf Seiten der drehbaren Komponente eine diametrale Nut aufweisen, in die eine Rippe oder Feder an der Stirnseite des ankoppelbaren Antriebselements eingreift, um eine drehfeste, in Drehrichtung formschlüssige Verbindung zwischen der drehbaren Komponente und dem Antriebselement herzustellen. Diese zur ersten Kupplungsstruktur komplementäre zweite Kupplungsstruktur kann an einer der Verdreheinrichtung zugewandten Stirnseite der Einzugseinrichtung vorgesehen sein, so dass diese direkt an die verdrehbare Komponente angekoppelt werden kann, um sie bei der Verdreh-Operation zu drehen.

Für die Realisierung der Schnitteinrichtung zum Abtrennen des Biegeteils von dem zugeführten Flachmaterial gibt es unterschiedliche Möglichkeiten. Bei manchen Ausführungsformen weist die Schnitteinrichtung ein fest montiertes Gegenmesser zum Hindurchführen des Flachmaterials und ein gegenüber dem Gegenmesser bewegliches Schermesser zum taktweisen Abtrennen von Flachmaterialabschnitten von dem zugeführten Flachmaterial auf. Zwischen den einander zugewandten Seitenflächen des Gegenmessers und des Schermessers wird ein Scherspalt gebildet. Beim Bewegen des Schermessers relativ zum Gegenmesser wird das Flachmaterial im Bereich des Scherspalts vom zugeführten Flachmaterial abgetrennt. Bei manchen Ausführungsformen ist die drehbare Komponente der Verdreheinrichtung in das Gegenmesser integriert, so dass sich eine besonders kompakte Bauform ergibt. Das Gegenmesser bekommt dadurch eine Doppelfunktion zum einen als funktioneller Bestandteil der Schnitteinrichtung und zum anderen als funktioneller Bestandteil der Verdreheinrichtung. Im Körper des Gegenmessers kann eine Aufnahmeöffnung gebildet sein, in der die drehbare Komponente der Verdreheinrichtung drehbar gelagert ist. Der Gegenmesserkörper dient somit auch als Lagerkörper für die drehbare Komponente. Die dem Schermesser zugewandte Austrittsfläche der drehbaren Komponente wirkt dann mit dem Schermesser zusammen und begrenzt den Scherspalt auf Seiten des Gegenmessers.

Es gibt auch Ausführungsformen mit einer Schnitteinrichtung, die funktional und räumlich separat von der Verdreheinrichtung angeordnet und konfiguriert ist. Eine solche Schnitteinrichtung kann der Verdreheinrichtung in Richtung der Materialzufuhr betrachtet vorgeschaltet sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig. 1: zeigt ein erstes Ausführungsbeispiel einer Biegemaschine für Flachmaterial mit einer in die Biegemaschine integrierten Verdreheinrichtung zum Erzeugen eines tordierten Abschnitts im Flachmaterial;
- Fig. 2: zeigt eine Detailansicht der Biegemaschine aus Fig. 1 während oder unmittelbar nach Abschluss einer Verdreh-Operation;
- Fig. 3: zeigt die in Fig. 2 gezeigten Komponenten nach Abschluss der Verdreh-Operation;
- Fig. 4: zeigt eine Detailansicht eines zweiten Ausführungsbeispiels einer Biegemaschine, bei der die Einzugseinrichtung zum Verdrehen einer drehbaren Komponente der Verdreheinrichtung genutzt wird;
- Fig. 5 bis Fig. 7: zeigen unterschiedliche Varianten von Komponenten für Verdreheinrichtungen;
- Fig. 8: zeigt schematisch eine andere Variante einer Biegemaschine mit Inline-Verdreheinrichtung;
- Fig. 9: zeigt ein Ausführungsbeispiel, bei dem die Verdreheinrichtung hinter dem Biegekopf der Biegeeinheit angeordnet ist;
- Fig. 10: zeigt in 10A bis 10C verschiedene Varianten drehbarer Komponenten und Antriebskonzepte zur Drehung dieser Komponenten.

### DETAILLIERTE BESCHREIBUNG DER AUSFÜHRUNGSBEISPIELE

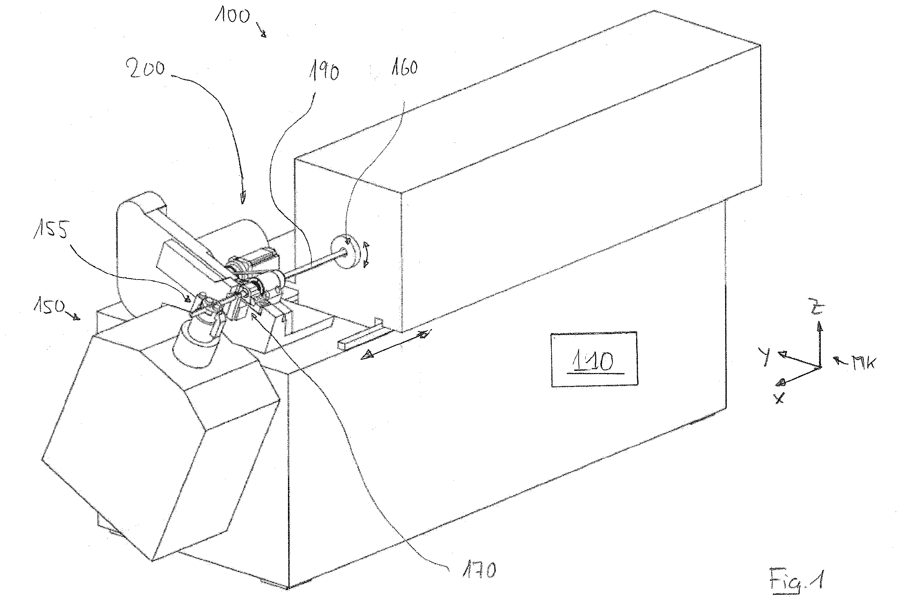

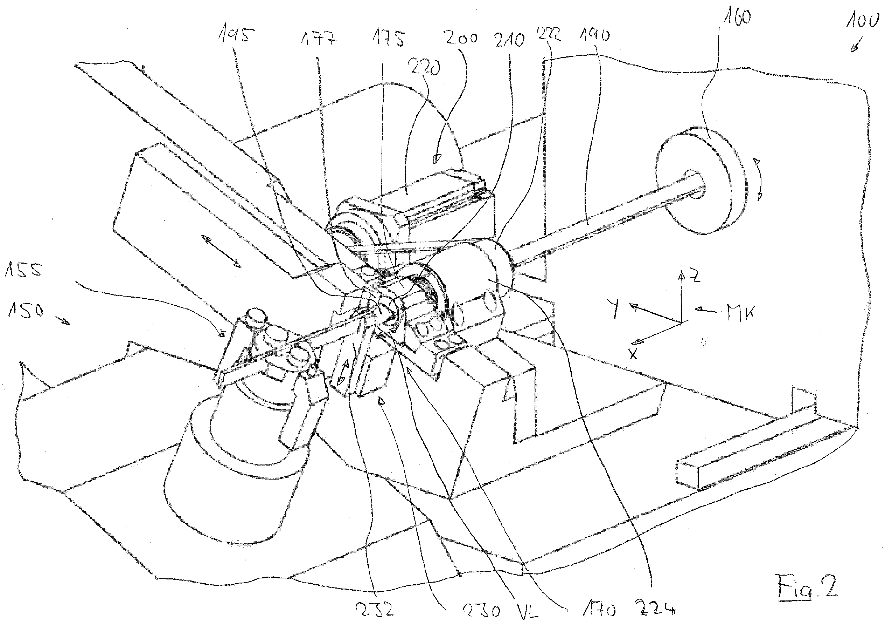

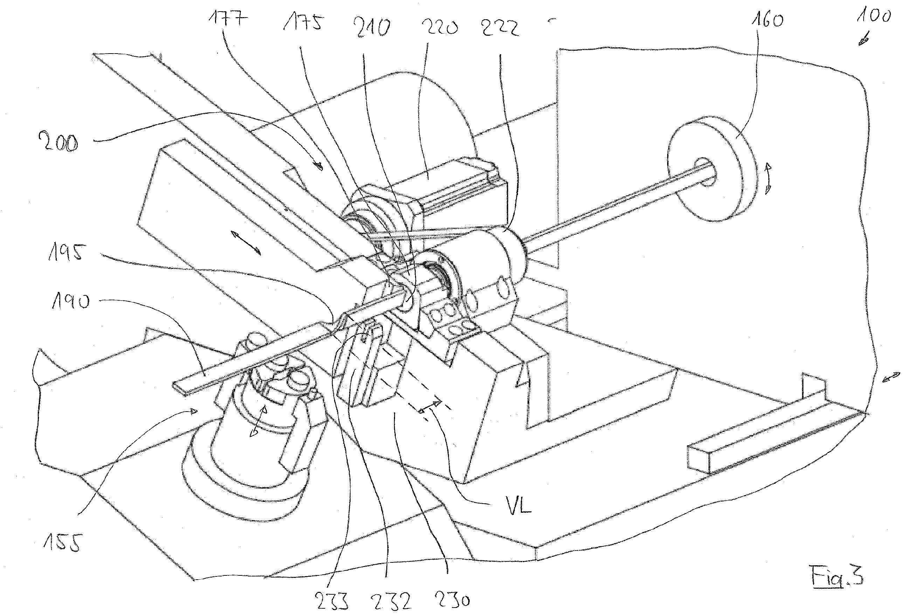

In Fig. 1 ist ein Ausführungsbeispiel einer Biegemaschine 100 zur Herstellung von zweidimensional oder dreidimensional gebogenen Biegeteilen aus isoliertem Flachmaterial 190 gezeigt. Die Biegemaschine hat eine integrierte Verdreheinrichtung 200, die dazu konfiguriert ist, vor Abtrennen des Biegeteils von dem zugeführten Flachmaterial in mindestens einem Abschnitt des Flachmaterials mittels einer Verdreh-Operation durch Torsion des Flachmaterials eine bleibende Verformung zu erzeugen. In Fig. 2 ist eine Detailansicht des Bereichs mit der Verdreheinrichtung 200 während oder unmittelbar nach Abschluss einer Verdreh-Operation gezeigt. Fig. 3 zeigt die in Fig. 2 gezeigten Komponenten nach Abschluss der Verdreh-Operation.

Die Biegemaschine hat ein mit Kleinbuchstaben x, y und z gekennzeichnetes, rechtwinkliges Maschinenkoordinatensystem MK mit einer vertikalen z-Achse und horizontalen x- und y-Achsen. Im dargestellten Beispiel verläuft die x-Achse parallel zu einer Einzugsrichtung, in der das zu biegende Flachmaterial mithilfe einer Einzugseinrichtung 160 einer nachgeschalteten Biegeeinrichtung 150 zugeführt wird. Von den Koordinatenachsen des Maschinenkoordinatensystems sind die später noch erwähnten geregelt angetriebenen Maschinenachsen zu unterscheiden, die mit Großbuchstaben (zum Beispiel A-Achse) bezeichnet werden. Eine Steuerungseinheit 110 der Biegemaschine steuert und koordiniert die Arbeitsbewegungen aller Maschinenachsen.

Das umzuformende Ausgangsmaterial, nämlich isoliertes Flachmaterial 190, wird mithilfe einer Einzugseinrichtung 160 durch die Biegemaschine gezogen. Die Einzugseinrichtung dient zum Zuführen des Flachmaterials von einem Materialvorrat. Die Vorschubkraft in Einzugsrichtung (parallel zur x-Richtung) entsteht dabei durch Reibung zwischen Einzugswalzen der Einzugseinrichtung und dem Flachmaterial. Je nach Bauart besitzt die Einzugseinrichtung mehr oder weniger Walzenpaare, beispielsweise drei oder vier Walzenpaare, wobei ein Walzenpaar ein Paar von gegenläufig drehend antreibbaren Einzugswalzen umfasst. Um das Flachmaterial schonend einzuziehen, sind die Einzugswalzen als einfache flache Zylinder, also mit im Wesentlichen kreiszylindrischer Umfangsfläche, gestaltet. Zur Unterstützung der Einzugswalzen befindet sich das Ausgangsmaterial im Beispielsfall in Form eines Coils auf einer motorbetriebenen Haspel. Beginnt die Maschine mit dem Einzug des Flachmaterials, wird ein Sensor angesprochen, der den Motor der Haspel ansteuert.

Bevor das Ausgangsmaterial (im Beispielsfall isoliertes Flachmaterial) in die Einzugseinrichtung eintritt, passiert das Flachmaterial eine Richteinheit, die im Beispielsfall eine Anzahl von versetzt angeordneten Rollen aufweist.

Für viele Biegeteile werden Biegungen in unterschiedlichen, im Winkel zueinander stehenden Biegeebenen benötigt, so dass die resultierenden Biegeteile dreidimensional gebogen sind. Um dies ohne komplizierten Aufbau der Biegeeinrichtung zu ermöglichen, ist bei der Biegemaschine des Ausführungsbeispiels vorgesehen, dass die Einzugseinrichtung 160 um die Einzugsachse in beiden Drehrichtungen drehbar ist. Dadurch kann auf einfache Weise zwischen einzelnen Biegeoperationen ein Wechsel zwischen Biegeebenen durchgeführt werden. Die Komponenten der Biegeeinrichtung 150 selbst tauchen dann in Biegekopf-Achsrichtung (Z-Achse) senkrecht zur x-Richtung weg, um nach dem Wechsel der Biegeebene wieder in das Flachmaterial eingreifen zu können. Die Z-Achse hat im Beispielsfall einen winkligen Versatz zur z-Richtung um ca. 20°. Beim Ausführungsbeispiel werden die Einzugseinrichtung 160 und die vorgeschaltete Richteinrichtung mithilfe eines Servomotors einer entsprechenden Maschinenachse (A-Achse) gedreht.

Die Einzugseinrichtung ist auf parallel zur x-Richtung verlaufenden Führungsschienen geführt und mittels eines Verschiebungsantriebs (V-Achse) parallel zur x-Richtung axial verschiebbar.

Zum Erzeugen von Biegungen an dem Flachmaterial 190 durch Umformung ist eine numerisch gesteuerte Biegeeinrichtung 150 vorgesehen. Im Biegebereich wird das Flachmaterial mithilfe eines CNC-gesteuerten Biegekopfs 155 der Biegeeinrichtung in die gewünschte Form gebogen. Optional kann ein CNC-gesteuerter Auflagetisch vorgesehen sein, um längere Materialabschnitte beim Biegen zu unterstützen. Der Biegekopf des Ausführungsbeispiels besitzt zwei unabhängig voneinander drehbare Wellen, nämlich eine Dornwelle und eine Hohlwelle. An der Dornwelle befinden sich Biegedorne. Je nach Bearbeitungswunsch kann der Biegekopf mit unterschiedlichen Werkzeugen ausgerüstet werden. Große Biegeteile können durch einen nachrüstbaren Auflagetisch unterstützt werden.

Zwischen dem Biegebereich mit dem Biegekopf 155 der Biegeeinrichtung 150 und der Einzugseinrichtung 160 ist eine Schnitteinrichtung 170 montiert, die dafür vorgesehen ist, das fertigte Biegeteil (nach Abschluss aller Biegeoperationen) und ggf. einer oder mehrerer Verdreh-Operationen von dem zugeführten Flachmaterial abzutrennen. Die Schnitteinrichtung 170 ist so eingerichtet, dass das Flachmaterial über eine Scherbewegung getrennt wird. Dazu weist die Schnitteinrichtung 170 ein Gegenmesser 175 mit einer Öffnung zum Hindurchführen des Flachmaterials 190 und ein gegenüber dem Gegenmesser bewegliches Schermesser 177 zum taktweisen Abtrennen von Flachmaterialabschnitten von dem zugeführten Flachmaterial auf. Das Gegenmesser ist stationär bzw. maschinenfest montiert, das dem Gegenmesser nachgeschaltete Schermesser ist an einem senkrecht zur x-Richtung linear beweglich geführten Messerträger montiert, der mittels eines an die Steuerungseinheit angeschlossenen Antriebs im Maschinentakt bewegt werden kann, um einen Scherschnitt auszuführen.

Durch Rückwärtslaufen des Materialeinzugs ist es möglich, die letzte gefertigte Biegung in Richtung der Schnitteinrichtung 170 heranzuziehen, so dass das Biegeteil dicht nach einer Biegung getrennt werden kann. Bei manchen Varianten ist es möglich, die Schnitteinrichtung mithilfe eines eigenen Antriebs zu verfahren. Das fertig gebogene Biegeteil kann nach Ausführung der Schnittoperation entweder in eine dafür vorgesehene Kiste fallen oder von einer Automation aufgenommen und zum nächsten Arbeitsschritt weitergefördert werden.

Mit der Biegemaschine 100 können unter anderem zweidimensional oder dreidimensional gebogene Stromschienen gefertigt werden, wie sie unter anderem in der Automobilbranche zum Transport elektrischer Energie zwischen Fahrzeugbaugruppen oder innerhalb von Batteriegruppen benötigt werden. Das Ausgangsmaterial ist in diesem Fall ein isoliertes Flachmaterial 190, welches im Wesentlichen aus einem elektrisch leitenden, metallischen Trägermaterial, einem Haftvermittler auf der Oberfläche des Trägermaterials sowie einer elektrisch isolierenden Isolationsschicht auf dem Haftvermittler besteht. Das Trägermaterial hat in der Regel einen flachen Rechteckquerschnitt mit Breitseiten und senkrecht dazu verlaufenden Schmalseiten. Die Isolationsschicht umhüllt das Trägermaterial vollständig. Die Isolationsschicht wird häufig aus bestimmten Polyamid-Kunststoffen gefertigt. Das Trägermaterial besteht meist aus Kupfer (Cu) oder Aluminium (Al) oder aus auf Cu oder Al basierenden Legierungen und ist für die Leitung des Stroms zuständig.

Die Breite des Flachmaterials (gemessen in Breitenrichtung senkrecht zur Längsrichtung) kann ein Vielfaches der Dicke (gemessen an den Schmalseiten) betragen, beispielsweise das Dreifache bis Siebenfache. Breiten können z.B. in der Größenordnung einiger Millimeter liegen. Die Isolationsschicht hat üblicherweise eine Dicke von weniger als 1 mm.

Details des Aufbaus und der Funktion der Verdreheinrichtung 200 werden nun anhand der Fig. 1 bis 3 näher erläutert. Fig. 2 zeigt dabei die Komponenten der Verdreheinrichtung während oder unmittelbar nach Abschluss der Verdreh-Operation, Fig. 3 zeigt eine danach folgende Phase nach Abschluss der Verdreh-Operation und weiterem Vorschub des verdrehten Flachmaterials. Alle zum Eingriff am Flachmaterial vorgesehenen Komponenten der Verdreheinrichtung 200 sind im Bereich zwischen dem Austritt der Einzugseinrichtung 160 und dem Biegekopf 155 der Biegeeinheit 150 angeordnet. Diese Konfiguration wird in dieser Anmeldung als "Inline-Verdreheinrichtung" bezeichnet.

Zu den steuerbaren Einrichtungen der Verdreheinrichtung gehört eine drehbare Komponente 210, die mittels eines damit gekoppelten Verdrehantriebs 220 (mit einem Servomotor) um eine Verdrehachse verdrehbar ist, die parallel zur Vorschubrichtung des Flachmaterials bzw. zur x-Richtung verläuft. Als weitere steuerbare Einrichtung ist eine Gegenhaltereinrichtung 230 vorgesehen, die einen Gegenhalter 232 umfasst, der mit Abstand hinter der drehbaren Komponente 210 angeordnet ist und mithilfe eines eigenen, im Beispielsfall pneumatischen, Antriebs (Gegenhalterantrieb) durch lineare Verschiebung in einer senkrecht zur x-Richtung verlaufenden Richtung wahlweise in Eingriff mit dem Flachmaterial 190 und außer Eingriff mit dem Flachmaterial bewegt werden kann.

Die drehbare Komponente 210 ist in das Gegenmesser 175 der Schnitteinrichtung 170 integriert. Die verdrehbare Komponente 210 hat im Wesentlichen die Gestalt eines Kreiszylinders, der in einer kreiszylindrischen Durchgangsöffnung bzw. Lageröffnung des Gegenmessers unbegrenzt drehbar gelagert ist. Die drehbare Komponente 210 hat eine axial durchgehende Durchführungsöffnung für das Flachmaterial, deren flach rechteckige Querschnittsform der flach rechteckigen Querschnittsform des Flachmaterials so angepasst ist, dass das Flachmaterial ungehemmt mit geringem seitlichen Spiel durch die Durchführungsöffnung hindurchgeführt werden kann. Die ebene Austrittsfläche der drehbaren Komponente 210 ist bündig mit der ebenen Austrittsfläche des Körpers des Gegenmessers 175 und bildet gemeinsam damit diejenige Seite des Gegenmessers, die den zwischen dem Schermesser und dem Gegenmesser gebildeten Scherspalt begrenzt.

Das Gegenhalterelement 232 der Gegenhaltereinrichtung 230 hat an seinem freien Ende einen stirnseitig offenen Durchführungsschlitz, dessen Dimensionen den Dimensionen des Flachmaterials 190 so angepasst sind, dass dieses mit geringem seitlichem Spiel hindurchpasst. Der freie axiale Abstand zwischen der drehbaren Komponente 210 und dem Gegenhalterelement 232 bestimmt die Verdrehlänge VL des dazwischen gebildeten verdrehten Abschnitts 195. Die Verdrehlänge VL beträgt im Beispiel zwischen 100% und 300% der Breite bzw. Breitseite des Flachmaterials und sollte meist so kurz wie möglich sein.

An der der Einzugseinrichtung zugewandten Seite hat die drehbare Komponente 210 eine erste Kupplungsstruktur zum formschlüssigen Ankuppeln eines Antriebselements, welches über den Verdrehantrieb 220 über einen Riementrieb drehbar angetrieben wird. Das Antriebselement 222 weist im Beispielsfall eine Hohlwelle auf, die in einem maschinenfest montierten Lagerelement 224 drehbar gelagert ist und durch die das Flachmaterial axial hindurchgeführt werden kann. An der der drehbaren Komponente 210 zugewandten Seite hat die Hohlwelle zweite Kupplungsstrukturen, die in die dazu komplementären ersten Kupplungsstrukturen der drehbaren Komponente passen, um eine drehfeste Verbindung zu bilden. Im Beispielsfall ist eine Nut/Feder-Verbindung vorgesehen, die eine Relativverschiebung der ineinandergreifenden Komponenten in Längsrichtung der Nut bzw. Feder erlaubt, jedoch in Drehrichtung formschlüssig ist, um Drehmoment zu übertragen. Die Nut und die Feder sind senkrecht zur Breitenrichtung der Durchlassöffnung ausgerichtet. Es wird über die Breitseite des Flachmaterials geschnitten. Durch eine senkrecht zum Schnittmesser angeordnete Nut/Feder-Verbindung werden dann keine Schnittkräfte auf die Lagerung übertragen.

Nachfolgend wird die Arbeitsweise bzw. die Funktion der miteinander zusammenwirkenden Komponenten der Biegemaschine vor, während und nach einer Verdreh-Operation beschrieben.

Zunächst wird über die Einzugseinrichtung 160 Flachmaterial 190 so weit in Richtung Biegekopf 155 befördert, bis ein zu verdrehender Abschnitt exakt im Bereich zwischen der Austrittsseite der verdrehbaren Komponente 210 und der Eintrittsebene des Gegenhalterelements 232 liegt. Bei dieser Vorschubbewegung ist die Drehposition der Einzugseinrichtung 160 so, dass das Flachmaterial hochkant steht, also mit seiner Breitseite parallel zur linearen Verfahrrichtung des Gegenhalters 232 bzw. zur Längsrichtung des darin gebildeten Schlitzes. Die Drehung der Einzugseinrichtung 160 und der drehbaren Komponente 210 sind über die Steuerungseinheit so synchronisiert, dass die Durchführungsöffnung der drehbaren Komponente 210 ebenfalls in dieser Richtung orientiert ist, so dass das Flachmaterial hindurchgeführt werden kann.

Ist die vorgesehene Vorschubposition erreicht, wird der Vorschub gestoppt. Dann wird die Gegenhaltereinrichtung 230 betätigt, um den Gegenhalter 232 aus der in Fig. 3 gezeigten zurückgezogenen Stellung in die in Fig. 2 gezeigte Eingriffsstellung zu bewegen, in welcher das Flachmaterial innerhalb des Führungsschlitzes 233 des Gegenhalters liegt.

Dann wird der Verdrehantrieb 220 angesteuert, um die drehbare Komponente 210 in der gewünschten Drehrichtung zu drehen. Soll beispielsweise eine 90°-Verdrehung erzeugt werden, wird typischerweise ein Verdrehwinkel von etwas mehr als 90° gefahren, so dass das Flachmaterial überbogen wird und danach im entspannten Zustand am verdrehten Abschniutt 195 die gewünschte 90°-Verdrehung vorliegt. Die Drehung der drehbaren Komponente 210 wird mittels der Steuerung mit der Drehung der Einzugseinrichtung 160 so synchronisiert, dass das Flachmaterial 190 im Bereich zwischen der Einzugseinrichtung 160 und der drehbaren Komponente 210 der Verdreheinrichtung 200 nicht tordiert wird. Nach Abschluss der Verdreh-Operation ist die in Fig. 2 gezeigte Konstellation erreicht, bei der der Gegenhalter 232 noch in Eingriff mit dem bereits verdrehten Flachmaterial steht.

Danach wird der Gegenhalter 232 pneumatisch von der Eingriffsstellung in die zurückgezogene Stellung (Fig. 3) bewegt, so dass eine Drehung des Flachmaterials über synchrone Drehung der Verdreheinrichtung 200 und der Einzugseinrichtung 160 wieder möglich ist.

Danach kann ein weiterer Vorschub erfolgen oder, wenn der verdrehte Abschnitt 195 unmittelbar am Ende des zu fertigenden Biegeteils liegen soll, die Schnitteinrichtung 170 betätigt werden. Zur Durchführung des Schnitts wird das Flachmaterial jeweils in die in Fig. 3 gezeigte Drehstellung gebracht, in welcher das Schneidmesser 177 der Schnitteinrichtung senkrecht zur Breitseite des Flachmaterials 190 angreift.

Ein großer Vorteil der Inline-Anordnung besteht darin, dass das Flachmaterial verdreht werden kann, ohne dass sich der bereits gebogene Teil des Flachmaterials (der eine oder mehrere ebene Biegungen enthalten kann) mitverdrehen muss. Dieser bereits gebogene Abschnitt steht beim Verdrehen fest. Es dreht sich nur derjenige Teil des Flachmaterials, der sich vor der Verdrehung in Richtung der Einzugseinrichtung befindet, wobei sich die Einzugseinrichtung während der Verdreh-Operation mit dreht.

Bei der in den Fig. 1 bis 3 gezeigten Ausführungsform hat die Verdreheinrichtung 200 einen eigenen Verdrehantrieb 220 in Form eines Servomotors, der über die Steuerungseinheit 110 der Biegemaschine mit dem Drehantrieb für die Einzugseinrichtung 160 phasenweise synchron angetrieben wird, um die Verdreh-Operation durchzuführen. Die Variante mit separatem Verdrehantrieb 220 erlaubt es, zwischen dem Austritt der Einzugseinrichtung 160 und dem Eintritt der Verdreheinrichtung (Eintritt der Hohlwelle 222) einen freien Bauraum vorzusehen, der für optionale weitere Komponenten der Biegemaschine genutzt werden kann. Bei einer nicht bildlich dargestellten Variante ist in diesem Bereich zwischen Einzugseinrichtung 160 und Verdreheinrichtung 200 eine in die Biegemaschine integrierte Abisoliereinrichtung zum Abisolieren von Abschnitten des isolierten Flachmaterials vor Abtrennen des Biegeteils von dem zugeführten Flachmaterial vorgesehen. Die Abisoliereinrichtung ist an die Steuerungseinheit 110 der Biegemaschine angeschlossen, so dass die Abisolier-Operation mittels der Abisoliereinrichtung unter der Steuerung durch die Steuerungseinheit durchführbar ist. Damit können die eventuell gewünschten Verdreh-Operationen an dem bereits wenigstens abschnittsweise abisolierten Flachmaterial durchgeführt werden.

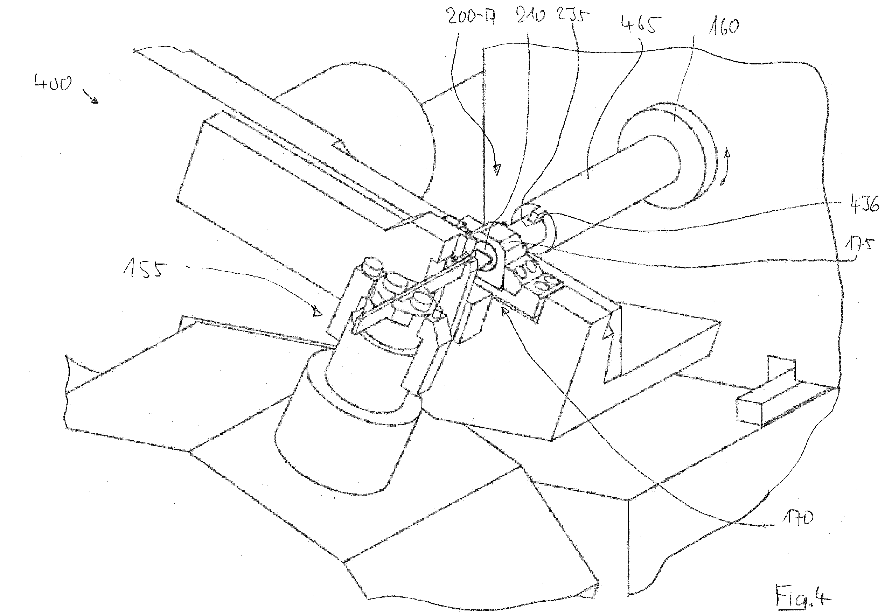

Anhand von Fig. 4 wird nun eine Ausführungsform einer Biegemaschine 400 erläutert, die eine zwischen Einzugseinrichtung und Biegekopf integrierte Verdreheinrichtung 200-A aufweist, die ohne gesonderten Verdrehantrieb auskommt, sondern den Drehantrieb der Einzugseinrichtung 160 zur Verdrehung der drehbaren Komponente 210 verwendet. Abgesehen von denjenigen Einrichtungen, die die Verdrehung der drehbaren Komponente 210 bewirken, sind die Komponenten der Verdreheinrichtung 200-A gleich oder identisch mit den entsprechenden Komponenten der Verdreheinrichtung 200, weshalb für die entsprechenden Komponenten die gleichen Bezugszeichen wie bei der ersten Ausführungsform verwendet werden. Auf die entsprechende Beschreibung wird Bezug genommen.

Bei dieser Ausführungsform ist genau wie bei der vorher beschriebenen Ausführungsform die drehbare Komponente 210 in das Gegenmesser 175 der Schnitteinrichtung 170 integriert und in diesem drehbar gelagert. Auf der der Einzugseinrichtung 160 zugewandten Stirnseite befinden sich entsprechende erste Kupplungsstrukturen 235, beispielsweise eine diametral verlaufende Nut, über die ein Antriebselement eines Verdrehantriebs angekoppelt werden kann.

Die Einzugseinrichtung 160 ist im Vergleich zum ersten Ausführungsbeispiel so modifiziert, dass sie an der dem Gegenmesser 175 zugewandten Seite ein rohrförmiges Zusatzelement 465 aufweist, durch das das Flachmaterial hindurchgeführt werden kann. An der freien Stirnseite dieses Zusatzelements befinden sich zu den ersten Kupplungsstrukturen komplementäre zweite Kupplungsstrukturen 436, so dass das Antriebselement 465 mit der drehbaren Komponente 210 drehfest gekoppelt werden kann. Damit können alle vor, während und nach der Verdreh-Operation erforderlichen Arbeitsbewegungen der drehbaren Komponente 210 mithilfe des Drehantriebs der Einzugseinrichtung 160 erzeugt werden, so dass ein gesonderter Verdrehantrieb der Verdreheinrichtung entfallen kann.

Es sind zahlreiche Varianten der hier beispielhaft dargestellten Lösungen zur Integration einer Verdreheinrichtung in eine Biegemaschine möglich. Anhand der nachfolgenden Figuren werden einige weitere mögliche Konzepte vorgestellt.

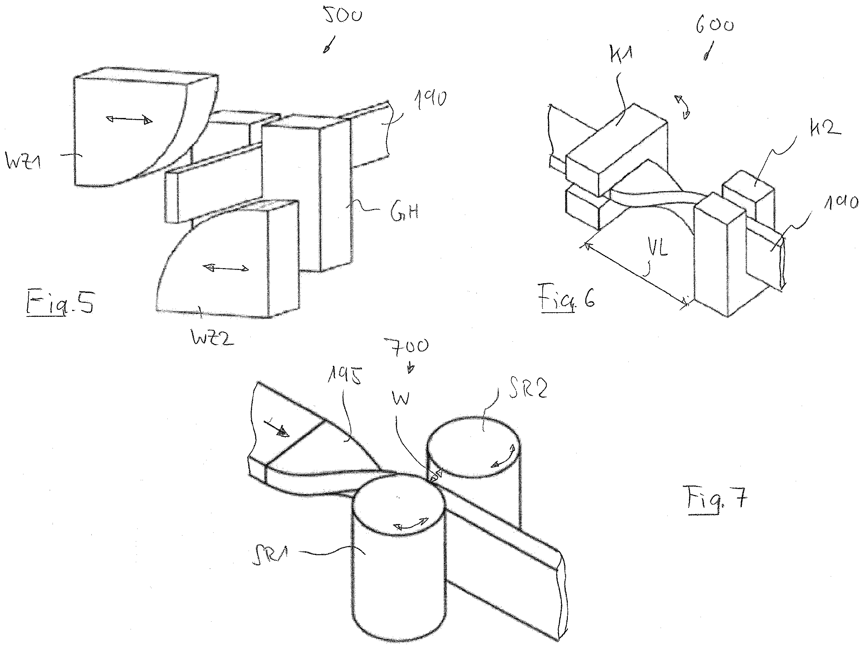

Die Verdreheinrichtung ist jeweils für das Verdrehen bzw. "Twisten" des Flachmaterials 190, also für die Erzeugung eines tordierten Abschnitts, zuständig. Diese Verdrehung erfolgt über eine gewisse Länge, die als Verdrehlänge bezeichnet wird und in der Regel so kurz wie möglich sein sollte. Bei der Verdreheinrichtung 500 in Fig. 5 werden zwei Werkzeuge WZ1, WZ2 in zueinander parallelen Zustellrichtungen translatorisch zugestellt. Die Werkzeuge liegen in einer gemeinsamen Werkzeugebene. Die Werkzeuge besitzen jeweils eine konvexe Rundung bzw. eine konvex gekrümmte Arbeitsfläche, die zum Flachmaterial 190 hin gerichtet ist. Im axialen Abstand der Verdrehlänge befindet sich eine Gegenhaltereinrichtung GH, beispielsweise in Form einer Zange oder in Form von Klemmen oder in Form eines zustellbaren Gegenhalters der vorher beschriebenen Art. Aufgabe der Gegenhaltereinrichtung GH ist es, die beim Verdrehen auftretenden Gegenkräfte abzustützen. Fahren nun die beiden Werkzeuge WZ1, WZ2 gegenparallel aufeinander zu, wird das Flachmaterial 190 gegen die Führung an der Gegenhaltereinrichtung GH verdreht und es entsteht im Zwischenbereich der verdrehte Abschnitt.

Bei der Variante von einer Verdreheinrichtung 600 in Fig. 6 wird das Flachmaterial 190 über zwei Komponenten K1, K2, die im Abstand der Verdrehlänge VL zueinander angeordnet sind, gestützt bzw. geklemmt. Im dargestellten Beispielsfall ist die erste Komponente K1 als drehbare Komponente ausgeführt und kann gegenüber der nicht drehbaren zweiten Komponente K2 verdreht werden. Dazu sind geeignete Einrichtungen zum Lagern und zum Antreiben der Drehung (Verdrehantrieb) erforderlich. Es ist in einer Variante auch möglich, beide Komponenten K1, K2 als drehbare Komponenten auszuführen, die z.B. über einen gemeinsamen Verdrehantrieb gegensinnig gegeneinander verdreht werden können.

Die Verdreheinrichtung 700 in Fig. 7 verdreht das Flachmaterial 190 mithilfe zweier zylindrischer Steigungsrollen SR1, SR2, die in einer gemeinsamen Ebene angeordnet sind und zwischen sich eine Durchlassöffnung bilden, deren lichte Weite W der Dicke des Flachmaterials angepasst und nur geringfügig größer als diese ist. Das Flachmaterial wird in diesem Beispielsfall in Einzugsrichtung bzw. Zuführrichtung (Pfeil) mithilfe der Einzugseinrichtung gegen das Rollenpaar befördert, so dass der verdrehte Abschnitt 195 im Flachmaterial erzeugt bzw. geformt wird. Die Steigungsrollen sind hierfür drehbar gelagert und vorzugsweise selbst angetrieben, um den bei der Torsion auftretenden Kräften gegenhalten zu können. Die angetriebenen Steigungsrollen können so angetrieben werden, dass sie das Flachmaterial durchziehen, also als Hilfsantrieb für den Einzug dienen. Die Kraft zum Verdrehen bzw. "Twisten" des Flachmaterials wird über die Vorschubkraft der Einzugseinrichtung aufgebracht. Gegebenenfalls kann zusätzlich eine Zusatzzange vorgesehen sein, die das Flachmaterial durch die Durchlassöffnung zwischen den Steigungsrollen zieht. Das Flachmaterial sollte kurz vor den Steigungsrollen geführt sein. Der Abstand der Führung des Flachmaterials zu den Steigungsrollen bestimmt die Verdrehlänge. Zur Vorgabe des Verdrehwinkels werden je nach Winkelgröße die Steigungsrollen in einem bestimmten Winkel angestellt.

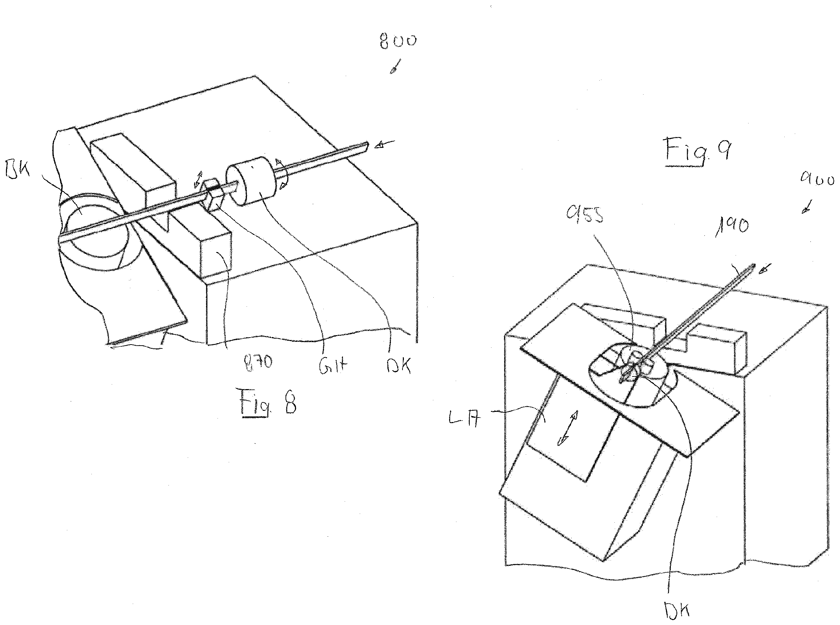

Anhand der Fig. 8 und 9 werden weitere Möglichkeiten zur Anordnung der Verdreheinrichtung innerhalb der Biegemaschine kurz vorgestellt. Es geht hier in erster Linie um die Position der am Flachmaterial angreifenden Komponenten der Verdreheinrichtung innerhalb der Biegemaschine.

Die Variante an der Biegemaschine 800 von Fig. 8 ist eine Beispiel einer Inline-Verdreheinrichtung, bei der sich die Komponenten der Verdreheinrichtung im Bereich zwischen der Einzugseinrichtung (im rechten Teil der Figur, nicht dargestellt) und dem Biegekopf (links) befinden. Bei der Variante von Fig. 8 befinden sich alle Komponenten der Verdreheinrichtung vor der Schnitteinrichtung 870. Mithilfe eines Verdrehantriebs wird das Verdrehen der drehbaren Komponente DK erzeugt. Der Gegenhalter GH kann abtauchen bzw. öffnen, wozu ein eigener Antrieb (beispielsweise ein pneumatischer Antrieb) genutzt werden kann. Mit unterschiedlichen Werkzeugsätzen, die auf den Gegenhalter geschraubt werden können, kann die Verdrehlänge (also der verdrehwirksame Abstand zwischen drehbarer Komponente DK und Gegenhalter GH) variiert werden. Die Verdrehung wird über eine als Zylinder ausgeführte drehbare Komponente DK erzeugt, die einen Schlitz in Querschnittsabmessung hat. Für die Verdreh-Operation bzw. das Twisten ist der Gegenhalter GH in der dargestellten ausgefahrenen Eingriffsstellung, um dem Drehmoment entgegenzuwirken. Die drehbare Komponente DK dreht synchron mit der Drehachse der Einzugseinrichtung und verdreht somit das Flachmaterial. Nach der Verdreh-Operation taucht der Gegenhalter GH ab bzw. öffnet, so dass das Flachmaterial weiterbefördert werden kann. Im Unterschied zu den Beispielen der Fig. 1 bis 4 ist die drehbare Komponente DK nicht in eine der Komponenten der Schnitteinrichtung integriert. Die Schnitteinrichtung 870 kann dementsprechend frei konstruiert werden und jede geeignete Ausgestaltung haben. Wie bei den anderen Inline-Ausführungen baut diese Variante sehr klein.

Die Verdreheinrichtung des in Fig. 9 gezeigten Ausführungsbeispiels einer Biegemaschine 900 unterscheidet sich von den Inline-Varianten unter anderem dadurch, dass die drehbare Komponente DK der Verdreheinrichtung nicht zwischen der Einzugseinrichtung (nicht dargestellt) und dem Biegekopf 955 angeordnet ist, sondern dem Biegekopf 955 nachgeschaltet ist. Die drehbare Komponente DK hat eine einseitig offene Durchgangsöffnung, so dass sie seitlich in Eingriff mit dem Flachmaterial 190 und außer Eingriff mit dem Flachmaterial gefahren werden kann. Über eine Linearachse LA kann die drehbare Komponente DK in die dargestellte Eingriffsstellung mit dem Flachmaterial oder in eine zurückgezogene Stellung gefahren werden. Der Biegekopf 955 fungiert als mit der drehbaren Komponente DK zusammenwirkender Gegenhalter und hält das Flachmaterial beim Tordieren in der auch für die Biege-Operationen erforderlichen dargestellten Orientierung.

Der Arbeitsablauf an dieser Biegemaschine 900 kann wie folgt beschrieben werden. Zur Einleitung einer Verdreh-Operation fährt die Linearachse LA hoch, so dass die schlitzförmige Aussparung der drehbaren Komponente DK das Flachmaterial 190 umfassen kann. Über einen nicht näher dargestellten Verdrehantrieb, der beispielsweise auf einem linear verfahrbaren Träger der Linearachse montiert sein kann, wird die drehbare Komponente DK verdreht, um im Bereich zwischen der Einklemmposition am Biegekopf 955 und der drehbaren Komponente DK den verdrehten Abschnitt zu erzeugen. Alternativ kann auch mit einem in das Werkzeug integrierten Gegenhalter gegengehalten werden. Nach Abschluss der Verdreh-Operation wird die drehbare Komponente DK und synchron damit die Einzugseinrichtung zurückgedreht, um zu erreichen, dass die noch in Eingriff mit dem Flachmaterial stehende drehbare Komponente DK in einer Abtauchphase wieder außer Eingriff gebracht werden kann. Dazu wir auch der Biegekopf 955 zurückgezogen, so dass das Flachmaterial 190 um seine Längsmittelachse gedreht werden kann. Ein Vorteil dieser Variante liegt darin, dass gegenüber einer Biegemaschine ohne Verdreheinrichtung nur zwei zusätzliche Antriebe benötigt werden und die Kräfte bzw. Momente, welche entstehen, durch die kompakte Einheit einfach aufgenommen werden können. Der Biegetisch kann weiterhin wie bisher genutzt werden.

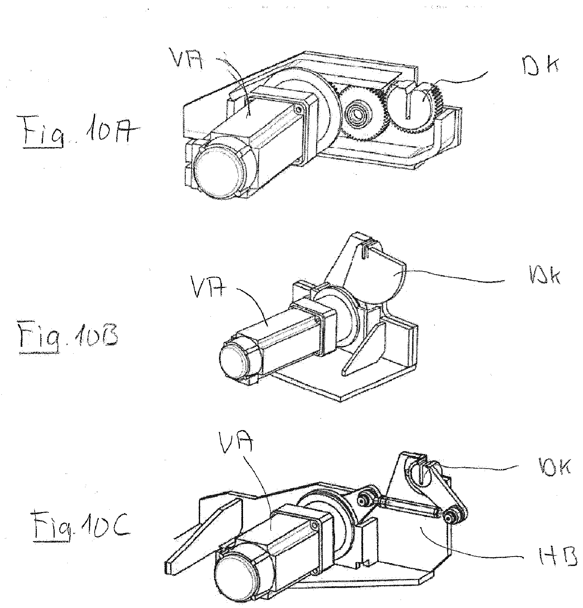

Anhand von Fig. 10A bis Fig. 10C wird beispielhaft erläutert, dass es alternativ zu den bisher dargestellten Möglichkeiten zur Verdrehung einer drehbaren Komponente der Verdreheinrichtung weitere Möglichkeiten gibt. Gemäß Fig. 10A kann die drehbare Komponente DK beispielsweise an ihrem Außenumfang eine Verzahnung haben, in die ein mit dem Verstellantrieb VA gekoppeltes Antriebszahnrad eingreift. Die axial durchgehende Durchgangsöffnung für das Flachmaterial ist in diesem Beispiel einseitig offen, so dass eine derartige Variante beispielsweise bei der Biegemaschine von Fig. 9 verwendet werden kann, bei der die drehbare Komponente durch lineares seitliches Verfahren senkrecht zur Längsrichtung in Eingriff bzw. außer Eingriff mit dem Flachmaterial gebracht wird. Bei der Variante von Fig. 10B ist die drehbare Komponente DK in Form eines Kreissegments gestaltet, an dessen Außenumfang eine Verzahnung ausgebildet ist, in die ein Antriebszahnrad eingreift. Bei der Variante von Fig. 10C wird die Verdrehung der drehbaren Komponente DK über einen Hebelmechanismus HB bewirkt, der vom Verdrehantrieb VA angetrieben wird.

## Patentansprüche

1. Verfahren zur Herstellung eines Biegeteils aus Flachmaterial (190), wobei
das Flachmaterial von einem Materialvorrat einer Biegemaschine (100) zugeführt wird,
in der Biegemaschine (100) zu einem zwei- oder dreidimensional gebogenen Biegeteil aus Flachmaterial umgeformt wird,
das Biegeteil in einer Schnittoperation von dem zugeführten Flachmaterial abgetrennt wird, und
in mindestens einem Abschnitt des Flachmaterials (190) mittels einer Verdreh-Operation durch Torsion des Flachmaterials eine bleibende Verformung erzeugt wird,
wobei die Verdreh-Operation vor dem Abtrennen des Biegeteils von dem zugeführten Flachmaterial an dem in der Biegemaschine geführten Flachmaterial mittels einer in die Biegemaschine integrierten Verdreheinrichtung (200) durchgeführt wird,
**dadurch gekennzeichnet, dass**
die Biegemaschine eine Einzugseinrichtung (160) zum Einziehen von Flachmaterial von einem Materialvorrat mit Flachmaterial in einer Einzugseinrichtung aufweist, wobei die Einzugseinrichtung mittels eines Drehantriebs um die Einzugsrichtung drehbar ist,
die Biegemaschine eine Biegeeinrichtung (150) mit einem Biegekopf (155) zum Biegen des Flachmaterials zu einem zwei- oder dreidimensional gebogenen Biegeteil aus Flachmaterial aufweist; und
die Erzeugung des tordierten Abschnitts (195) im Bereich zwischen der Einzugseinrichtung (160) und dem Biegekopf (155) der Biegemaschine (100) erfolgt, wobei das Flachmaterial (190) während der Verdreh-Operation an beiden Seiten eines zu verdrehenden Abschnitts durch steuerbare Einrichtungen der Biegemaschine geführt und/oder gehalten wird und
die steuerbaren Einrichtungen eine drehbare Komponente (210, DK) aufweisen, die eine Durchführungsöffnung zum Hindurchführen des Flachmaterials (190) aufweist, wobei die drehbare Komponente zur Erzeugung des verdrehten Abschnitts mittels eines Verdrehantriebs (220) der Biegemaschine um eine Verdrehachse gedreht wird,
wobei
der Drehantrieb der Einzugseinrichtung (160) der Biegemaschine oder ein von der Einzugseinrichtung gesonderter Verdrehantrieb als Verdrehantrieb zur Drehung der drehbaren Komponente (210) verwendet wird.

2. Verfahren nach Anspruch 1, **dadurch gekennzeichnet, dass** die steuerbaren Einrichtungen eine Gegenhaltereinrichtung (230, GH) aufweisen, die mittels eines Antriebs der Biegemaschine wahlweise in Eingriff und außer Eingriff mit dem Flachmaterial (190) bewegbar ist und bei der Erzeugung des verdrehten Abschnitts (195) in Eingriff mit dem Flachmaterial steht und Gegenkräfte aufnimmt.

3. Verfahren nach einem der Ansprüche 1 oder 2, **gekennzeichnet durch** die Verwendung eines Biegekopfs (955) der Biegemaschine als Gegenhaltereinrichtung bei der Erzeugung eines verdrehten Abschnitts.

4. Biegemaschine (100) zur Herstellung von Biegeteilen aus Flachmaterial (190) umfassend:
eine Einzugseinrichtung (160) zum Einziehen von Flachmaterial von einem Materialvorrat mit Flachmaterial,
eine Biegeeinrichtung (150) mit einem Biegekopf (155) zum Biegen des Flachmaterials zu einem zwei- oder dreidimensional gebogenen Biegeteil aus Flachmaterial;
einer Schnitteinrichtung (170) zum Abtrennen des Biegeteils von dem zugeführten Flachmaterial, und
eine in die Biegemaschine integrierte Verdreheinrichtung (200), die dazu konfiguriert ist, vor Abtrennen des Biegeteils von dem zugeführten Flachmaterial in mindestens einem Abschnitt des Flachmaterials mittels einer Verdreh-Operation durch Torsion des Flachmaterials eine bleibende Verformung zu erzeugen,
**dadurch gekennzeichnet, dass**
die Einzugseinrichtung mittels eines Drehantriebs um eine Einzugsrichtung drehbar ist, alle in Eingriff mit dem Flachmaterial (190) kommenden Komponenten der Verdreheinrichtung (200) zwischen der Einzugseinrichtung (160) und dem Biegekopf (155) der Biegeeinrichtung (150) angeordnet sind, und
die Verdreheinrichtung (200) eine drehbare Komponente (210, DK) aufweist, die mittels eines Antriebs (210) der Biegemaschine um eine Verdrehachse drehbar ist und die eine querschnittsangepasste Durchführungsöffnung zum Hindurchführen des Flachmaterials aufweist,
wobei zum Verdrehen der drehbaren Komponente der Drehantrieb der Einzugseinrichtung oder ein von der Einzugseinrichtung (160) gesonderter Verdrehantrieb (210) vorgesehen ist.

5. Biegemaschine nach Anspruch 4, **dadurch gekennzeichnet, dass** die Verdreheinrichtung (200) eine Gegenhaltereinrichtung (230, GH) aufweisen, die mittels eines Antriebs der Biegemaschine wahlweise in Eingriff und außer Eingriff mit dem Flachmaterial bewegbar ist.

6. Biegemaschine nach einem der Ansprüche 4 bis 5, **dadurch gekennzeichnet, dass** die drehbare Komponente (210) der Verdreheinrichtung (200) an ihrer der Einzugseinrichtung (160) zugewandten Seite eine erste Kupplungsstruktur (235) zum drehfesten Ankuppeln eines über den Verdrehantrieb angetriebenen Antriebselements (222) aufweist.

7. Biegemaschine nach Anspruch 6, **dadurch gekennzeichnet, dass** an einer der Verdreheinrichtung zugewandten Stirnseite der Einzugseinrichtung eine zur ersten Kupplungsstruktur komplementäre zweite Kupplungsstruktur (436) vorgesehen ist, so dass diese direkt an die drehbare Komponente (210) angekoppelt werden kann, um sie bei der Verdreh-Operation zu drehen.

8. Biegemaschine nach einem der Ansprüche 4 bis 7, **dadurch gekennzeichnet, dass** die Schnitteinrichtung (170) ein fest montiertes Gegenmesser (175) zum Hindurchführen des Flachmaterials (190) und ein gegenüber dem Gegenmesser bewegliches Schermesser (177) aufweist, wobei die drehbare Komponente (210) der Verdreheinrichtung (200) in das Gegenmesser (175) integriert ist.

9. Biegemaschine nach einem der Ansprüche 4 bis 8, **dadurch gekennzeichnet, dass** die Biegemaschine eine integrierte Abisoliereinrichtung zum Abisolieren von Abschnitten des isolierten Flachmaterials (190) vor Abtrennen des Biegeteils von dem zugeführten Flachmaterial aufweist.

10. Biegemaschine nach Anspruch 9, **dadurch gekennzeichnet, dass** die Abisoliereinrichtung zwischen der Einzugseinrichtung und der Verdreheinrichtung der Biegeeinrichtung angeordnet ist.

## Claims

1. Method for producing a bent part from flat material (190), wherein
the flat material is fed from a material supply to a bending machine (100) and
is re-shaped in the bending machine (100) to form a bent part composed of flat material that is bent in a two-dimensional or three-dimensional manner,
the bent part is cut off from the fed flat material in a cutting operation, and
a permanent deformation is produced in at least one portion of the flat material (190) by way of twisting of the flat material by means of a twisting operation,
wherein the twisting operation is carried out at the flat material guided in the bending machine by means of a twisting device (200), which is integrated into the bending machine, before the bent part is cut off from the fed flat material,
**characterized in that**
the bending machine has a drawing-in device (160) for drawing in flat material from a material supply with flat material in a drawing-in direction, wherein the drawing-in device is rotatable about the drawing-in direction by means of a rotary drive, the bending machine has a bending device (150) with a bending head (155) for bending the flat material to form a bent part composed of flat material that is bent in a two-dimensional or three-dimensional manner; and
the twisted portion (195) is produced in the region between the drawing-in device (160) and the bending head (155) of the bending machine (100), wherein, during the twisting operation, the flat material (190) is guided and/or held by controllable devices of the bending machine on both sides of a portion to be twisted, and
the controllable devices have a rotatable component (210, DK) which has a feedthrough opening for passage of the flat material (190), wherein, for producing the twisted portion, the rotatable component is rotated about a twist axis by means of a twist drive (220) of the bending machine, wherein
the rotary drive of the drawing-in device (160) of the bending machine or a twist drive which is separate from the drawing-in device is used as twist drive for rotation of the rotatable component (210).

2. Method according to Claim 1, **characterized in that** the controllable devices have a counter-holder device (230, GH) which is selectively movable into engagement and out of engagement with the flat material (190) by means of a drive of the bending machine and which, when the twisted portion (195) is produced, is in engagement with the flat material and absorbs opposing forces.

3. Method according to either of Claims 1 and 2, **characterized by** the use of a bending head (955) of the bending machine as counter-holder device when the twisted portion is produced.

4. Bending machine (100) for producing bent parts from flat material (190), comprising:
a drawing-in device (160) for drawing in flat material from a material supply with flat material, a bending device (150) with a bending head (155) for bending the flat material to form a bent part composed of flat material that is bent in a two-dimensional or three-dimensional manner;
a cutting device (170) for cutting off the bent part from the fed flat material, and
a twisting device (200) which is integrated into the bending machine and is configured to produce a permanent deformation in at least one portion of the flat material by way of twisting of the flat material by means of a twisting operation before the bent part is cut off from the fed flat material,
**characterized in that**
the drawing-in device is rotatable about a drawing-in direction by means of a rotary drive,
all the components of the twisting device (200) that come into engagement with the flat material (190) are arranged between the drawing-in device (160) and the bending head (155) of the bending device (150), and
the twisting device (200) has a rotatable component (210, DK) which is rotatable about a twist axis by means of a drive (210) of the bending machine and which has a cross-sectionally adapted feedthrough opening for passage of the flat material,
wherein the rotary drive of the drawing-in device or a twist drive (210) which is separate from the drawing-in device (160) is provided for rotation of the rotatable component (210).

5. Bending machine according to Claim 4, **characterized in that** the twisting device (200) has a counter-holder device (230, GH) which is selectively movable into engagement and out of engagement with the flat material by means of a drive of the bending machine.

6. Bending machine according to either of Claims 4 and 5, **characterized in that**, on its side facing towards the drawing-in device (160), the rotatable component (210) of the twisting device (200) has a first coupling structure (235) for rotationally conjoint coupling of a drive element (222) which is driven via the twist drive.

7. Bending machine according to Claim 6, **characterized in that**, on an end face of the drawing-in device that faces towards the twisting device, there is provided a second coupling structure (436), complementary to the first coupling structure, such that this can be coupled directly to the rotatable component (210) in order to rotate it during the twisting operation.

8. Bending machine according to one of Claims 4 to 7, **characterized in that** the cutting device (170) has a fixedly mounted counter-cutter (175) for passage of the flat material (190) and has a shearing cutter (177) which is movable in relation to the counter-cutter, wherein the rotatable component (210) of the twisting device (200) is integrated into the counter-cutter (175).

9. Bending machine according to one of Claims 4 to 8, **characterized in that** the bending machine has an integrated insulation-stripping device for stripping portions of the insulated flat material (190) of insulation before the bent part is cut off from the fed flat material.

10. Bending machine according to Claim 9, **characterized in that** the insulation-stripping device is arranged between the drawing-in device and the twisting device of the bending device.

## Revendications

1. Procédé de fabrication d'une pièce pliée en matériau plat (190), dans lequel
le matériau plat est amené à une machine de pliage (100) à partir d'une réserve de matériau,
est transformé dans la machine de pliage (100) en une pièce pliée en deux ou trois dimensions en matériau plat, la pièce pliée est séparée du matériau plat amené dans d'une opération de coupe, et
une déformation permanente est produite dans au moins une section du matériau plat (190) au moyen d'une opération de vrillage par torsion du matériau plat,
l'opération de vrillage étant effectuée avant la séparation de la pièce pliée du matériau plat amené sur le matériau plat guidé dans la machine de pliage au moyen d'un dispositif de vrillage (200) intégré dans la machine de pliage,
**caractérisé en ce que**
la machine de pliage présente un dispositif d'introduction (160) pour introduire du matériau plat à partir d'une réserve de matériau avec du matériau plat dans un direction d'introduction, le dispositif d'introduction étant rotatif autour de la direction d'introduction au moyen d'un entraînement de rotation, la machine de pliage présente un dispositif de pliage (150) avec une tête de pliage (155) pour plier le matériau plat en une pièce pliée en deux ou trois dimensions en matériau plat ; et
la production de la section tordue (195) s'effectue dans la zone entre le dispositif d'introduction (160) et la tête de pliage (155) de la machine de pliage (100),
le matériau plat (190) étant guidé et/ou maintenu pendant l'opération de vrillage des deux côtés d'une section à vriller par des dispositifs commandables de la machine de pliage et
les dispositifs commandables présentant un composant rotatif (210, DK) qui présente une ouverture de passage pour le passage du matériau plat (190), le composant rotatif étant tourné autour d'un axe de vrillage pour produire la section vrillée au moyen d'un entraînement de vrillage (220) de la machine de pliage, l'entraînement de rotation du dispositif d'introduction (160) de la machine de pliage ou un entraînement de vrillage séparé du dispositif d'introduction étant utilisé en tant qu'entraînement de vrillage pour faire tourner le composant rotatif (210).

2. Procédé selon la revendication 1, **caractérisé en ce que** les dispositifs commandables présentent un dispositif de contre-appui (230, GH) qui peut être déplacé sélectivement en prise et hors de prise avec le matériau plat (190) au moyen d'un entraînement de la machine de pliage et qui, lors de la production de la section vrillée (195), est en prise avec le matériau plat et absorbe des forces antagonistes.

3. Procédé selon l'une quelconque des revendications 1 ou 2, **caractérisé par** l'utilisation d'une tête de pliage (955) de la machine de pliage en tant que dispositif de contre-appui lors de la production d'une section vrillée.

4. Machine de pliage (100) pour la fabrication de pièces pliées en matériau plat (190), comprenant :
un dispositif d'introduction (160) pour introduire du matériau plat à partir d'une réserve de matériau avec du matériau plat,
un dispositif de pliage (150) avec une tête de pliage (155) pour plier le matériau plat en une pièce pliée en deux ou trois dimensions en matériau plat ;
un dispositif de coupe (170) pour séparer la pièce pliée du matériau plat amené, et
un dispositif de vrillage (200) intégré à la machine de pliage, qui est configuré pour produire une déformation permanente dans au moins une section du matériau plat au moyen d'une opération de vrillage par torsion du matériau plat avant la séparation de la pièce pliée du matériau plat amené,
**caractérisée en ce que**
le dispositif d'introduction est rotatif autour d'une direction d'introduction au moyen d'un entraînement de rotation,
tous les composants du dispositif de vrillage (200) venant en prise avec le matériau plat (190) sont agencés entre le dispositif d'introduction (160) et la tête de pliage (155) du dispositif de pliage (150), et
le dispositif de vrillage (200) présente un composant rotatif (210, DK) qui est rotatif autour d'un axe de vrillage au moyen d'un entraînement (210) de la machine de pliage et qui présente une ouverture de passage adaptée en section transversale pour le passage du matériau plat,
l'entraînement de rotation du dispositif d'introduction ou un entraînement de vrillage (210) séparé du dispositif d'introduction (160) étant prévu pour le vrillage du composant rotatif.

5. Machine de pliage selon la revendication 4, **caractérisée en ce que** le dispositif de vrillage (200) présente un dispositif de contre-appui (230, GH) qui peut être déplacé sélectivement en prise et hors de prise avec le matériau plat au moyen d'un entraînement de la machine de pliage.

6. Machine de pliage selon l'une quelconque des revendications 4 à 5, **caractérisée en ce que** le composant rotatif (210) du dispositif de vrillage (200) présente, sur son côté tourné vers le dispositif d'introduction (160), une première structure d'accouplement (235) pour l'accouplement immobile en rotation d'un élément d'entraînement (222) entraîné par l'entraînement de vrillage.

7. Machine de pliage selon la revendication 6, **caractérisée en ce qu'**une deuxième structure d'accouplement (436) complémentaire à la première structure d'accouplement est prévue sur un côté frontal du dispositif d'introduction tourné vers le dispositif de vrillage, de telle sorte que celle-ci peut être accouplée directement au composant rotatif (210) pour le faire tourner lors de l'opération de vrillage.

8. Machine de pliage selon l'une quelconque des revendications 4 à 7, **caractérisée en ce que** le dispositif de coupe (170) présente une contre-lame (175) montée fixement pour le passage du matériau plat (190) et une lame de cisaillement (177) mobile par rapport à la contre-lame, le composant rotatif (210) du dispositif de vrillage (200) étant intégré à la contre-lame (175).

9. Machine de pliage selon l'une quelconque des revendications 4 à 8, **caractérisée en ce que** la machine de pliage présente un dispositif de dénudage intégré pour dénuder des sections du matériau plat isolé (190) avant la séparation de la pièce pliée du matériau plat amené.

10. Machine de pliage selon la revendication 9, **caractérisée en ce que** le dispositif de dénudage est agencé entre le dispositif d'introduction et le dispositif de vrillage du dispositif de pliage.
